# EUROPEAN PATENT SPECIFICATION

(11) **EP 3 068 913 B1**
(45) Date of publication and mention of the grant of the patent: **02.01.2019**
(21) Application number: 14815780.3
(22) Date of filing: 14.11.2014
(51) Int. Cl.: C22B 3/30, C22B 3/04, C22B 3/00, C22B 23/00

(54) **METHOD FOR SEPARATING NICKEL AND COBALT FROM NICKEL LATERITES AND NICKEL LATERITE LEACH SOLUTIONS**
VERFAHREN ZUR TRENNUNG VON NICKEL UND KOBALT AUS NICKEL-LATERITEN UND NICKEL-LATERIT-LAUGENLÖSUNGEN
PROCÉDÉ DE SÉPARER DU NICKEL ET DU COBALT DE LATÉRITES DE NICKEL ET DE SOLUTIONS DE LIXIVIATION DE LATÉRITE DE NICKEL

(30) Priority: 15.11.2013 FI 20136132
(43) Date of publication of application: 21.09.2016
(73) Proprietor: Outotec (Finland) Oy, 02230 Espoo (FI)
(72) Inventor: LAITALA, Hannu, FI-02700 Kauniainen (FI)
(74) Representative: Seppo Laine Oy
(86) International application number: PCT/FI2014/050864
(87) International publication number: WO 2015/071547

(56) References cited:
- WO-A1-2005/073416
- CHENG C Y ET AL: "Recovery of nickel and cobalt from laterite leach solutions using direct solvent extraction: Part 1 - selection of a synergistic SX system", HYDROMETALLURGY, ELSEVIER SCIENTIFIC PUBLISHING CY. AMSTERDAM, NL, vol. 104, no. 1, 1 July 2010 (2010-07-01), pages 45-52, XP027125358, ISSN: 0304-386X [retrieved on 2010-07-01]
- DITTRICH C ET AL: "Separation and Purification of Base Metals from Bio-leach Solutions by Solvent Extraction (SX)", WORLD OF METALLURGY - ERZMETALL, GDMB - MEDIENVERLAG, CLAUSTHAL-ZELLERFELD, DE, vol. 62, no. 6, 1 November 2009 (2009-11-01), pages 372-375, XP001557638, ISSN: 1613-2394
- CHENG ET AL: "Solvent extraction of nickel and cobalt with synergistic systems consisting of carboxylic acid and aliphatic hydroxyoxime", HYDROMETALLURGY, ELSEVIER SCIENTIFIC PUBLISHING CY. AMSTERDAM, NL, vol. 84, no. 1-2, 1 October 2006 (2006-10-01), pages 109-117, XP027884172, ISSN: 0304-386X [retrieved on 2006-10-01]
- CHENG C Y ET AL: "Recovery of nickel and cobalt from laterite leach solutions using direct solvent extraction", HYDROMETALLURGY, ELSEVIER SCIENTIFIC PUBLISHING CY. AMSTERDAM, NL, vol. 104, no. 1, 1 July 2010 (2010-07-01), pages 53-60, XP027125359, ISSN: 0304-386X [retrieved on 2010-07-01]
- BARNARD K R ET AL: "Hydroxyoxime stability and unusual cobalt loading behaviour in the LIX 63 Versatic 10 tributyl phosphate synergistic system under synthetic laterite conditions", HYDROMETALLURGY, ELSEVIER SCIENTIFIC PUBLISHING CY. AMSTERDAM, NL, vol. 109, no. 1, 9 May 2011 (2011-05-09), pages 29-36, XP028267177, ISSN: 0304-386X, DOI: 10.1016/J.HYDROMET.2011.05.004 [retrieved on 2011-05-15]

## Description

### FIELD OF THE INVENTION

The present invention relates to a method for separating nickel and cobalt from nickel laterites and nickel laterite leach solutions, especially acidic nickel laterite leach solutions.

### BACKGROUND OF THE INVENTION

Nickel laterites contain nickel in typical amounts of about 1 to 2%. The leach solutions contain cobalt in typical amounts of 0.1 to 1 g/l. Main impurities are iron (Fe), aluminium (Al), manganese (Mn) and magnesium (Mg). The impurity levels of the nickel laterite leach solutions typically vary from a few grams per liter to several tens of grams per liter.

Oxime-based solvent extraction processes represent one option for separating impurities and recovering nickel and cobalt from leach solutions obtained from hydrometallurgical treatment of nickel laterites.

US 4 193 969 discloses a process for recovering nickel and cobalt from acidic process solutions with an organic extractant containing an α-hydroxyoxime and a sulfonic acid. By this combination of extracting reagents, nickel and cobalt can be recovered separately and thus separated from each other. The acidic process solutions have a pH value of less than 4. They are typically selected from pregnant acidic leach solutions resulting from hydrometallurgical treatment of nickel and/or cobalt bearing ores.

US 2006/0263282 A1 discloses a method for the recovery of nickel and cobalt from nickel and cobalt containing laterite ores. The method comprises roasting the feed ore in a reducing atmosphere, leaching the reduced ore with an aerated ammoniacal ammonium carbonate solution and recovering nickel and cobalt by ammoniacal solvent extraction, precipitation techniques or ion exchange. The extraction reagent in the solvent extraction may be an oxime reagent, such as 2-hydroxy-5-t-nonyl acetophenone oxime. Nickel and cobalt are extracted simultaneously.

WO 2005073416 A1 discloses a process for the separation of nickel and cobalt from impurity elements contained in a leach solution. The leach solution is subjected to extraction with a hydroxyoxime, particularly an aliphatic hydroxyoxime, carboxylic acid and preferably a stabilizer to prevent oxime degradation.

Cheng (Hydrometallurgy 84 (2006) 109-117) recommends a process wherein a leaching solution comprising nickel and cobalt is solvent extracted with synergistic systems consisting of carboxylic acid and an aliphatic hydroxyoxime. In an experiment wherein the leaching solution was treated by using solely an aliphatic hydroxyoxime extraction agent, recovery of cobalt and nickel was achieved at a pH of 7.0 or above.

One of the disadvantages associated with the above described oxime-based extraction methods is that the organic extraction reagent (oxime) has a tendency to decompose in the described process conditions. This leads to reduced extraction yields of the desired metals. The decomposing of oxime increases also the operating costs.

### BRIEF DESCRIPTION OF THE INVENTION

An object of the present invention is thus to provide a method so as to alleviate the above disadvantages. The objects of the invention are achieved by a method which is characterized by what is stated in the independent claim. The preferred embodiments of the invention are disclosed in the dependent claims.

The invention is based on simultaneous extraction of nickel and cobalt from aluminium- and iron-free acidic nickel laterite leach solutions under specified process conditions.

### BRIEF DESCRIPTION OF THE DRAWINGS

In the following the invention will be described in greater detail by means of preferred embodiments with reference to the attached drawings, in which

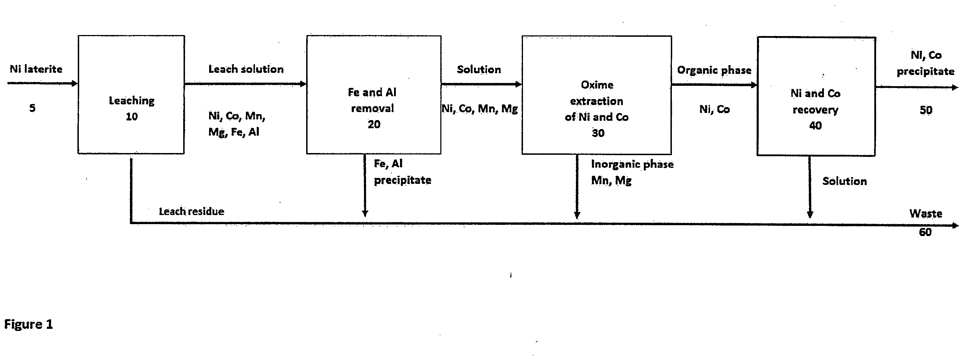

Figure 1 is a block diagram of an exemplary embodiment of the invention, showing also leaching of nickel laterite and removal of iron and aluminium as pretreatment steps and recovery of nickel and cobalt as a post-treatment step.

### DETAILED DESCRIPTION OF THE INVENTION

The invention relates to a method of separating nickel and cobalt from an aluminium- and iron-free acidic nickel laterite leach solution by subjecting the leach solution to extraction with an aromatic hydroxyoxime at a pH in the range of 4 to 5.5 and at a temperature of less than 100°C to obtain a nickel and cobalt bearing solution.

The starting material for the oxime extraction is an aluminium- and iron-free acidic nickel laterite leach solution. In connection with the present invention, the aluminium- and iron-free nickel laterite leach solution refers to a solution obtained from acidic leaching of nickel laterite and having an aluminium content of less than 0.01 g/l and an iron content of less than 0.01 g/l.

The extraction agent used in the method of the invention is an aromatic hydroxyoxime dissolved in a water-immiscible organic solvent. Hydroxyoxime is a compound containing an oxime group and a hydroxyl group. Preferably the hydroxy group is at the α- or β-position, more preferably at the β-position in respect to the oxime group. The hydroxyoxime is suitably an aldoxime or a ketoxime, or a mixture thereof, preferably an aldoxime.

The α-hydroxy oximes that are advantageously used can be depicted by the formula: 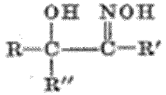 where R and R' are organic hydrocarbon radicals, such as aliphatic or alkylaryl radicals and R" may be selected from hydrogen and organic hydrocarbon radicals, such as aliphatic and alkylaryl radicals. Preferably, R and R' are mono- or polyunsaturated hydrocarbon radicals or branched chain alkyl radicals containing about 6 to 20 carbon atoms. R and R' are preferably the same radicals. The alkyl radicals are preferably attached to the carbons substituted with the -OH and =NOH groups through a secondary carbon atom. The mono- and polyunsaturated hydrocarbon radicals may be selected from heptenyl, octenyl, decenyl and octadecenyl as well as alkyl substituted radicals, such as ethyloctadecenyl, for example. Examples of mono- and polyalkyl substituted saturated hydrocarbon radicals are ethylhexyl, diethylheptyl, butyldecyl, butylhexadecyl, ethylbutyldecyl and butylcyclohexyl.

Advantageously, the aromatic hydroxyoxime of the present invention has a formula (I) 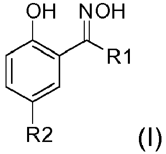 wherein R1 is H or C₁₋₆-alkyl, preferably H or CH₃, and R2 is C₇₋₁₅-alkyl.

Examples of suitable aldoximes include aromatic aldoximes such as 5-nonylsalicylaldoxime (e.g. Acorga M5640 or LIX860N), or 5-dodecylsalicylaldozime (e.g. LIX860). Examples of suitable ketoximes include aromatic ketoximes such as 2-hydroxy-5-nonylacetophenone oxime (e.g. LIX84), 1-(5-nonyl-2-hydroxyphenyl)(phenyl)ethan-1-one oxime (e.g. LIX65N), (5-dodecyl-2-hydroxyphenyl)(phenyl)methanone oxime (LIX 65).

Typically the hydroxime is selected from a group consisting of 5-nonylsalicylaldoxime, 5-dodecylsalicylaldozime, 2-hydroxy-5-nonylacetophenone oxime, 1-(5-nonyl-2-hydroxyphenyl)(phenyl)ethan-1-one oxime and (5-dodecyl-2-hydroxyphenyl)(phenyl)methanone oxime.

For the extraction, the oxime is dissolved in a water-immiscible organic solvent, which may be selected from aliphatic and aromatic hydrocarbons, such as benzene, toluene, xylene, fuel oil and kerosene. The amount of the oxime in the water-immiscible organic solvent is preferably in the range of 2 to 50%, more preferably 2 to 15% by weight based on the total organic phase.

The oxime extraction is performed at a pH in the range of 4 to 5.5. Within this pH range, nickel and cobalt are separated from other metals present in leach solution, such as manganese and magnesium. Nickel and cobalt are simultaneously extracted into the organic phase; however, magnesium and manganese are not extracted into the organic phase under these conditions.

The temperature in the oxime extraction is less than 100°C, typically 30 to 50°C, preferably 35 to 45°C.

In the oxime extraction of the present invention, the oxime has no tendency to decompose or oxidize, because there are no oxidation agents (such as permanganate) present in the extraction and the temperature is also reasonably low.

The oxime extraction produces a nickel and cobalt bearing organic solution as well as an inorganic solution containing metal impurities, such as manganese and magnesium. The organic solution and the inorganic solution are separated from each other in accordance with conventional methods.

The method of the present invention comprises one or more further steps of recovering nickel and cobalt from the nickel and cobalt bearing organic solution obtained from the oxime extraction. Typically nickel and cobalt are stripped from the organic solution bearing them into a water phase. This may be done by conventional methods. In a preferred embodiment of the invention, the recovery comprises simultaneous precipitation of nickel and cobalt as a mixed hydroxide precipitate using chemicals, such as CaO, Ca(OH)₂, CaCO₃, NaOH, Na₂CO₃, MgO. The precipitation produces a very pure hydroxide precipitate containing only nickel and cobalt. The precipitation is performed by increasing the pH of the solution. Nickel and cobalt can then be separately recovered from the mixed hydroxide precipitate by further solvent extraction processes and electrical methods, for example.

In another embodiment of the method of the invention, the method further comprises a pretreatment step of removing iron and aluminium from an acidic nickel laterite leach solution prior to the oxime extraction. The removal of iron and aluminium may be performed by precipitation with chemicals, such as lime. Nickel and cobalt and further metals such as manganese and magnesium remain in the leach solution, while aluminium and iron are precipitated in the leach residue. The removal of iron and aluminium produces an aluminium- and iron-free leach solution and a leach residue containing aluminium and iron. The aluminium- and iron-free leach solution and the leach residue are separated from each other in accordance with conventional solid/liquid separation methods.

In a further embodiment of the method of the invention, the method comprises a further pretreatment step of leaching nickel laterite with an acid prior to the removal of iron and aluminium. The acid leaching may be performed by sulphuric acid, for example.

In a still further embodiment of the invention, the method comprises pretreatment steps for separating nickel and cobalt from nickel laterite, whereby the method comprises:
(a) acid leaching of nickel laterite to obtain a leach solution containing nickel and cobalt and other metals selected from manganese, magnesium, iron and aluminium,
(b) removal of aluminium and iron from the leach solution to obtain a solution containing nickel and cobalt and other metals selected from manganese and magnesium,
(c) extraction of nickel and cobalt with an aromatic hydroxyoxime from the solution obtained in step (b) at a pH in the range of 4 to 5.5 and at a temperature of less than 100°C to obtain a nickel and cobalt bearing solution,
(d) recovering nickel and cobalt from the nickel and cobalt bearing solution.

Step (b) for the removal of aluminium and iron and may be performed for example by precipitation as described above. Furthermore, step (d) for recovering nickel and cobalt may be performed by precipitation as described above.

An arrangement for separating nickel and cobalt from an aluminium- and iron-free acidic nickel laterite leach solution comprises an extraction unit adapted for forming a nickel and cobalt bearing solution from an aluminium- and iron-free acidic nickel laterite leach solution by oxime extraction at a pH in the range of 4 to 5.5 and at a temperature of less than 100°C.

In the arrangement, the extraction unit is followed by a recovery unit adapted for recovering nickel and cobalt from the nickel and cobalt bearing solution.

In the arrangement, the extraction unit is preceded by a separation unit adapted for removing aluminium and iron from an acidic nickel laterite leach solution to form an aluminium- and iron-free acidic nickel laterite leach solution.

In the arrangement, the separation unit is preceded by a leaching unit adapted for acidic leaching of nickel laterite to form an acidic nickel laterite leach solution.

An arrangement for removing nickel and cobalt from nickel laterite may comprise:
(a) a leaching unit adapted for acidic leaching of nickel laterite to form a leach solution containing nickel and cobalt and other metals selected from manganese, magnesium, iron and aluminium,
(b) a separation unit adapted for removing aluminium and iron from the solution obtained from unit (a) to obtain a leach solution containing nickel and cobalt and other metals selected from manganese and magnesium,
(c) an extraction unit adapted for extracting nickel and cobalt by oxime extraction from the solution obtained from unit (b) at a pH in the range of 4 to 5.5 and at a temperature of less than 100°C to form a nickel and cobalt bearing solution,
(d) a recovery unit adapted for recovering nickel and cobalt from the nickel and cobalt bearing solution obtained from unit (c).

In the arrangement, the separation unit (b) comprises means for separating aluminium and iron by precipitation.

In the arrangement, the recovery unit (c) comprises means for recovering nickel and cobalt by precipitation.

In the following, the invention is illustrated by referring to Figure 1, which is an exemplary embodiment of the method of the present invention, showing also leaching of nickel laterite and removal of iron and aluminium as pretreatment steps and recovery of nickel and cobalt as a post-treatment step.

In accordance with Figure 1, nickel laterite 5 is introduced into leaching 10. The nickel laterite used as the starting material contains nickel (Ni) and cobalt (Co) as the desired product metals as well as manganese (Mn), magnesium (Mg), iron (Fe) and aluminium (Al) as impurities. The leaching is performed as acid leaching with sulphuric acid. The leaching produces a leach solution containing Ni, Co, Mn, Mg, Fe and Al as well as a solid leach residue. The leach solution and the leach residue are separated from each other by solid/liquid separation (not shown in Figure 1).

The leach solution containing Ni, Co, Mn, Mg, Fe and Al is further introduced into a step for removing iron and aluminium (Fe and Al removal step 20), which is performed by precipitation with lime. The precipitation produces a precipitate containing Fe and Al as well as an aluminium- and iron-free solution containing Ni, Co, Mn and Mg. The precipitate containing Fe and Al and the aluminium- and iron-free solution containing Ni, Co, Mn and Mg are separated by solid/liquid separation (not shown in Figure 1).

The aluminium- and iron-free solution containing Ni, Co, Mn and Mg is introduced into an extraction step where nickel and cobalt are extracted with an aromatic hydroxyoxime (oxime extraction 30). The oxime extraction is performed typically with 5-nonylsalicylaldoxime at a pH of approximately 5.0 and at a temperature of about 40°C. The oxime extraction produces an organic phase containing Ni and Co and an inorganic phase containing Mn and Mg. The organic phase and the inorganic phase are separated in accordance with conventional methods (not shown in Figure 1). Ni and Co are stripped from the organic phase into a water phase (not shown in Figure 1).

The water phase containing Ni and Co is further introduced into a step of recovering nickel and cobalt (Ni and Co recovery step 40). The recovery of Ni and Co is performed by precipitation with Ca(OH)₂, MgO or NaOH to form a mixed precipitate containing nickel and cobalt (Ni, Co precipitate 50). The precipitate containing Ni and Co is separated from the remaining solution by solid/liquid separation techniques (not shown in Figure 1).

The leach residue from leaching 10, the Fe- and Al-containing precipitate from Fe and Al removal 20, the inorganic phase containing Mn and Mg from oxime extraction 30 and the solution from Ni and Co recovery 40 are combined as a waste product (waste 60).

In the process arrangement of Figure 1, the nickel and cobalt bearing process stream (organic phase containing Ni and Co) introduced into the precipitation of nickel and cobalt (Ni and Co precipitation 40) is a reasonably concentrated solution (10 m³/h, 1000 kg/h Ni). This makes the precipitation process after the oxime extraction cheap, small-scaled and simple, because reasonably small volumes of process solutions are to be treated.

Furthermore, the metal losses in the process arrangement of Figure 1 are minimized, whereby the total recovery of Ni and Co after the leaching stage to the Ni and Co precipitation stage is more than 95%.

After the recovery stage 40 by precipitation, Ni and Co can then be separately recovered by various solvent extraction techniques or electrical methods, for example.

It will be obvious to a person skilled in the art that, as the technology advances, the inventive concept can be implemented in various ways. The invention and its embodiments are not limited to the examples described above but may vary within the scope of the claims.

## Claims

1. A method of separating nickel and cobalt from an aluminium- and iron-free acidic nickel laterite leach solution, **characterized by** subjecting the leach solution to extraction with an aromatic hydroxyoxime dissolved in a water-immiscible organic solvent at a pH in the range of 4 to 5.5 and at a temperature of less than 100°C to obtain a nickel and cobalt bearing solution,
wherein the method comprises a further step of recovering nickel and cobalt from the nickel and cobalt bearing solution obtained from the oxime extraction, wherein the recovery of nickel and cobalt comprises precipitation.

2. The method as claimed in claim 1, **characterized in that** the extraction temperature is in the range of 30 to 50°C, preferably 35 to 45°C.

3. The method as claimed in claim 1 or 2, **characterized in that** the aromatic hydroxyoxime is selected from 5-nonylsalicylaldoxime, 5-dodecylsalicylaldozime, 2-hydroxy-5-nonylacetophenone oxime, 1-(5-nonyl-2-hydroxyphenyl)(phenyl)ethan-1-one oxime and (5-dodecyl-2-hydroxyphenyl)(phenyl)methanone oxime.

4. The method as claimed in any one of the preceding claims, **characterized in that** the precipitation is performed as hydroxide precipitation.

5. The method as claimed in any one of the preceding claims, **characterized in that** the method further comprises a pretreatment step of removing aluminium and iron from an acidic nickel laterite leach solution prior to the oxime extraction.

6. The method as claimed in claim 5, **characterized in that** the removal of iron and aluminium is performed by precipitation.

7. The method as claimed in claim 6, **characterized in that** the precipitation is performed with lime.

8. The method as claimed in any one of the preceding claims, **characterized in that** the method comprises a further pretreatment step of leaching nickel laterite with an acid prior to the removal of aluminium and iron.

9. The method as claimed in claim 1, **characterized in that** the method comprises the following pretreatment steps:
(a) acid leaching of nickel laterite to obtain a leach solution containing nickel and cobalt and other metals selected from manganese, magnesium, iron and aluminium, and
(b) removal of aluminium and iron from the leach solution to obtain a solution containing nickel and cobalt and other metals selected from manganese and magnesium, wherein removal of aluminium and iron is performed by precipitation.

## Patentansprüche

1. Verfahren zur Abtrennung von Nickel und Cobalt von einer aluminium- und eisenfreien sauren Nickel-Laterit-Laugungslösung, **dadurch gekennzeichnet, dass** die Laugungslösung der Extraktion mit einem aromatischen Hydroxyoxim, dass in einem mit Wasser nicht mischbaren organischen Lösungsmittel gelöst ist, bei einem pH im Bereich von 4 bis 5,5 und bei einer Temperatur von weniger als 100°C unterzogen wird, um eine nickel- und kobalthaltige Lösung zu erhalten,
wobei das Verfahren einen weiteren Schritt des Rückgewinnens von Nickel und Kobalt aus der durch die Oxim-Extraktion erhaltenen nickel- und kobalthaltigen Lösung umfasst, wobei das Rückgewinnen von Nickel und Kobalt Ausfällen umfasst.

2. Verfahren nach Anspruch 1, **dadurch gekennzeichnet, dass** die Extraktionstemperatur im Bereich von 30 bis 50°C, vorzugsweise 35 bis 45°C, liegt.

3. Verfahren nach Anspruch 1 oder 2, **dadurch gekennzeichnet, dass** das aromatische Hydroxyoxim ausgewählt ist aus 5-Nonylsalicylaldoxim, 5-Dodecylsalicylaldozim, 2-Hydroxy-5-nonylacetophenonoxim, 1-(5-Nonyl-2-hydroxyphenyl)(phenyl)ethan-1-on-oxim und (5-Dodecyl-2-hydroxyphenyl)(phenyl)methanonoxim.

4. Verfahren nach einem der vorstehenden Ansprüche, **dadurch gekennzeichnet, dass** das Ausfällen als Hydroxidausfällen durchgeführt wird.

5. Verfahren nach einem der vorstehenden Ansprüche, **dadurch gekennzeichnet, dass** das Verfahren weiter einen Vorbehandlungsschritt des Entfernens von Aluminium und Eisen aus einer sauren Nickel-Laterit-Laugungslösung vor der Oxim-Extraktion umfasst.

6. Verfahren nach Anspruch 5, **dadurch gekennzeichnet, dass** das Entfernen von Eisen und Aluminium durch Ausfällen erfolgt.

7. Verfahren nach Anspruch 6, **dadurch gekennzeichnet, dass** das Ausfällen mit Kalk durchgeführt wird.

8. Verfahren nach einem der vorstehenden Ansprüche, **dadurch gekennzeichnet, dass** das Verfahren einen weiteren Vorbehandlungsschritt des Auslaugens von Nickel-Laterit mit einer Säure vor dem Entfernen von Aluminium und Eisen umfasst.

9. Verfahren nach Anspruch 1, **dadurch gekennzeichnet, dass** das Verfahren die folgenden Vorbehandlungsschritte umfasst:
(a) Säureauslaugen von Nickel-Laterit, um eine Laugungslösung zu erhalten, die Nickel und Kobalt und andere Metalle, ausgewählt aus Mangan, Magnesium, Eisen und Aluminium, enthält, und
(b) Entfernen von Aluminium und Eisen aus der Laugungslösung, um eine Lösung zu erhalten, die Nickel und Kobalt und andere Metalle, ausgewählt aus Mangan und Magnesium, enthält, wobei das Entfernen von Aluminium und Eisen durch Ausfällen erfolgt.

## Revendications

1. Procédé de séparation de nickel et de cobalt d'une solution de lixiviation acide à base de latérite de nickel exempte d'aluminium et de fer, **caractérisé en ce que** la solution de lixiviation est soumise à une extraction à l'aide d'une hydroxyoxime aromatique dissoute dans un solvant organique non miscible à l'eau à un pH situé dans la plage allant de 4 à 5,5 et à une température inférieure à 100°C pour obtenir une solution contenant du nickel et du cobalt,
dans lequel le procédé comprenant une étape supplémentaire de récupération du nickel et du cobalt de la solution contenant du nickel et du cobalt obtenue à partir de l'extraction d'oxime, dans laquelle la récupération du nickel et du cobalt comprend une précipitation.

2. Procédé selon la revendication 1, **caractérisé en ce que** la température d'extraction se situe dans la plage allant de 30 à 50°C, de préférence 35 à 45°C.

3. Procédé selon la revendication 1 ou 2, **caractérisé en ce que** l'hydroxyoxime aromatique est choisie parmi la 5-nonylsalicylaldoxime, la 5-dodécylsalicylaldozime, la 2-hydroxy-5-nonylacétophénone oxime, la 1-(5-nonyl-2-hydroxyphényl)(phényl)éthan-1-one oxime et la (5-dodécyl-2-hydroxyphényl)(phényl)méthanone oxime.

4. Procédé selon l'une quelconque des revendications précédentes, **caractérisé en ce que** la précipitation est réalisée sous forme de précipitation d'hydroxyde.

5. Procédé selon l'une quelconque des revendications précédentes, **caractérisé en ce que** le procédé comprend en outre une étape de prétraitement pour éliminer l'aluminium et le fer d'une solution de lixiviation acide à base de latérite de nickel avant l'extraction à l'oxime.

6. Procédé selon la revendication 5, **caractérisé en ce que** l'élimination du fer et de l'aluminium est réalisée par précipitation.

7. Procédé selon la revendication 6, **caractérisé en ce que** la précipitation est réalisée à la chaux.

8. Procédé selon l'une quelconque des revendications précédentes, **caractérisé en ce qu'**il comprend une étape de prétraitement supplémentaire de lixiviation de la latérite de nickel avec un acide avant l'élimination de l'aluminium et du fer.

9. Procédé selon l'une des revendications 1, **caractérisé en ce qu'**il comprend les étapes de prétraitement suivantes :
(a) la lixiviation acide de la latérite de nickel pour obtenir une solution de lixiviation contenant du nickel et du cobalt et d'autres métaux choisis parmi le manganèse, le magnésium, le fer et l'aluminium; et
(b) l'élimination de l'aluminium et du fer de la solution de lixiviation pour obtenir une solution contenant du nickel et du cobalt et d'autres métaux choisis parmi le manganèse et le magnésium, l'élimination de l'aluminium et du fer étant réalisée par précipitation.
